# EUROPEAN PATENT APPLICATION

(11) **EP 1 111 870 A2**
(43) Date of publication of application: **27.06.2001**
(21) Application number: 00128166.6
(22) Date of filing: 21.12.2000
(51) Int. Cl.: H04L 29/06, H04L 12/46

(54) **Communication method and communication system**

(30) Priority: 24.12.1999 JP 36585699
(71) Applicant: NEC CORPORATION, Tokyo (JP)
(72) Inventor: Serada, Teruharu, c/o NEC Corporation, Tokyo (JP)
(74) Representative: Betten & Resch

(57) **Abstract**

A communication method and a communication system can ensure security of communication between a portable type information terminal and a server storing demanded contents. The communication method performs transmission of an encrypted data with a predetermined protocol realizing process for ensuring security in communication on a telephone network between a portable type information terminal having a function obtaining a content on a network and displaying the content and a gateway connected with the portable type information terminal through the telephone network and performs tunneling process for the encrypted data between the gateway and a server storing the content on the network.

## Description

### BACKGROUND OF THE INVENTION

### Field of the Invention

The present invention relates generally to a communication method and a communication system suitable for accessing internet by means of a personal handy phone system (PHS), cellular telephone and a portable type information terminal, such as a portable type computer or the like. More particularly, the invention relates to a communication method and a communication system which can enhance security in communication.

### Description of the Related Art

Associating with spreading of internet, chances to perform shopping on world wide web (WWW), to deal with a bank deposits and postal saving using a banking system on the internet and to make various notification on WWW. It has been closed up a problem on security of communication on a network system.

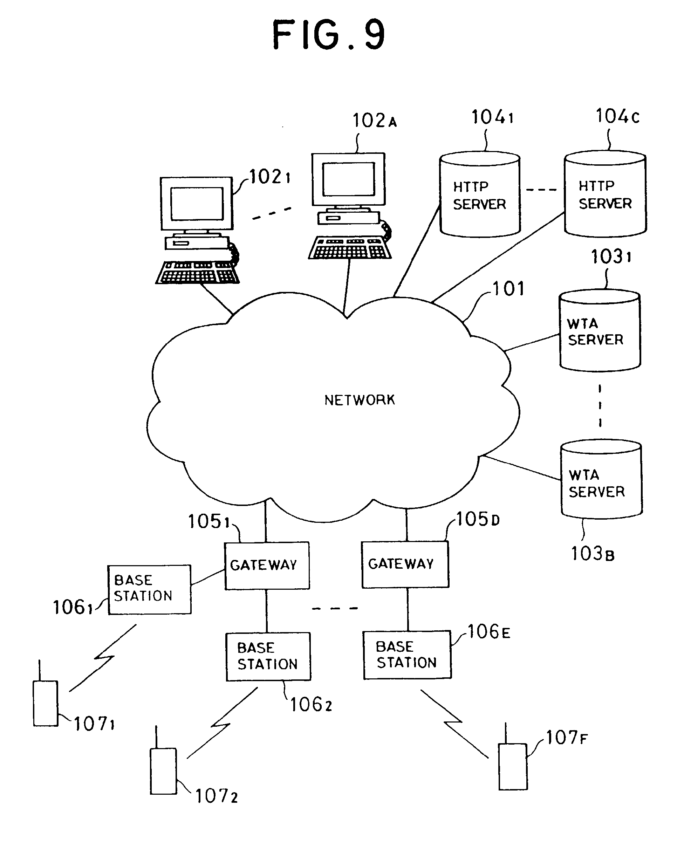

Fig. 9 shows a general construction of a communication system using the internet, conventionally. In the network 101, a plurality of computers 102₁ to 102_{A}, such as personal computer or the like, a plurality of conventional wireless telephony application (WTA) servers 103₁ to 103_{B} and a plurality of hypertext transfer protocol (HTTP) servers 104₁ to 104_{C} are connected. On the other hand, to the network 101, gateways 105₁ to 105_{D} are connected. To these, portable type information terminals 107₁ to 107_{F} are connected via respective base stations 106₁ to 106_{E}. Here, A to F are voluntary integers greater than or equal to two.

In such communication system, for example, it is assumed that the first computer 102₁ accesses the WWW contents as data stored in the first conventional type WTA server 103₁. In this case, the first computer 102₁ designates a uniform resource location (URL) of WWW contents. Then, communication is performed for accessing contents on WWW using a communication protocol called as a hypertext transfer protocol (HTTP). Particularly, the first computer 102₁ transmits the URL of a hypertext markup language (HTML) document desired to display as request. In case of the conventional type WTA server 103₁ and HTTP servers 104₁ to 104_{C} transmits the corresponding HTML document to the first computer 102₁ as client. In this communication protocol, connection has to be established to the conventional type WTA server 103₁ or corresponding HTTP servers HTTP servers 104₁ to 104_{C} every time of obtaining communication data for breaking connection upon completion of reception of the communication data.

Next, discussion will be given for the case where a first portable type information terminal 107₁ as one of the portable type information terminals 107₁ to 107_{F} accesses the conventional type WTA server 103₁. In this case, between a first gateway 105₁ to be connected to the first portable type information terminal 107₁ and the conventional type WTA server 103₁, the communication protocol called as HTTP is used similarly to the case where the former computers 102₁ to 102_{A} access the conventional type WTA servers 103₁ to 103_{B}. In a wireless application protocol (WAP), a protocol called as wireless session protocol (WSP) is used between the first gateway 105₁ and the first portable type information terminal 107₁.

Here, WAP is a protocol for obtaining internet information using a telephone network from the portable type information terminal. The information is obtained from WWW using a wireless markup language (WML) similar to HTML.

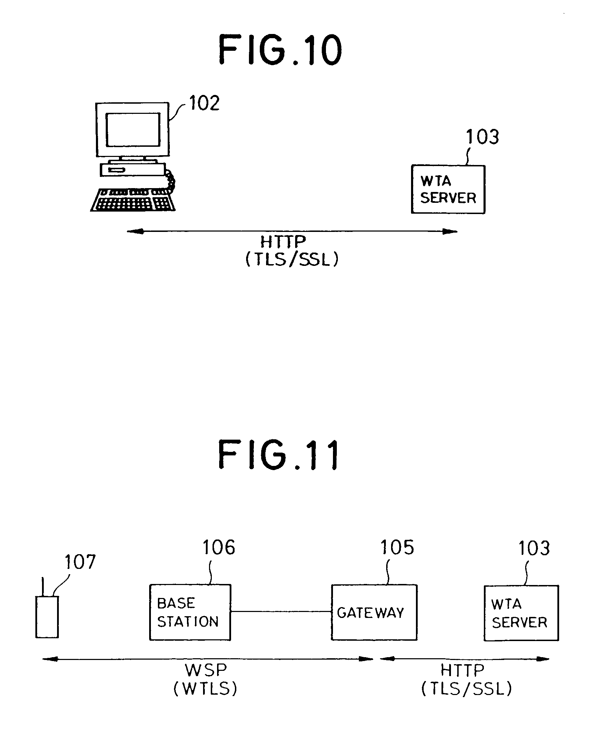

Fig. 10 shows a manner of communication between the computer in the communication system and the HTTP server. The computer 102 and the conventional type WTA server 103 performs communication of various data, such as data written by a description language of HTML, data of graphic interchange format (GIF) or bitmap (BMP) using HTTP.

Fig. 11 shows a manner of communication between the portable type information terminal and the conventional type WTA server. Between the conventional type WTA server 103 and the gateway 105, communication similar to that between the computer 102 and the conventional type WTA server 103 as discussed with reference to Fig. 10 is performed. Between the portable type information terminal 107 and the gateway 105, a communication method different from that between the conventional type WTA server 103 and the gateway 105 is employed in consideration of small capacity of memory mounted in the portable type information terminal and/or incapability of mounting of central processing unit (CPU) performing high speed operation for saving power consumption and saving space. As communication method in this zone, WAP set forth above has been attracting attention.

In WAP, the description language called as HTML transmitted from the conventional type WTA server 103 is fed to the gateway 105. Then, display positions of images based on graphic interchange format (GIF) or the like is calculated. Then, data is modified in a form which can be actually displayed in one frame of the display on the portable type information terminal. The modified data is fed to the portable type information terminal 107 as a binary data. At this time, transfer of data is performed using the protocol called as wireless session protocol (WSP).

When information is transmitted using the above-mentioned network, it is required to consider for security of communication . Between the computer 102 and the conventional type WTA server 103 shown in Fig. 10, security of communication is ensured by encryption and authentication by using secure socket layer (SSL) or transport layer security (TLS). Here, SSL is a protocol realizing encrypting and authenticating function in socket level. TSL is succeeding security protocol of SSL. Since these are substantially the same protocol, they are occasionally expressed as TLS/SSL. In the following discussion, the expression TLS/SSL will be used.

Between the portable type information terminal 107 and the conventional type WTA server 103 shown in Fig. 11, TLS/SSL is similarly used. On the other hand, between the portable type information terminal 107 and the gateway 105, a protocol called as wireless transport layer security (WTLS) is used. This protocol is a protocol having equivalent function to TLS or the like as standard of internet and is optimized for the portable type information terminal 107. This protocol also has functions for encryption, authentication, compression and so forth.

By employing the encryption technology set forth above, security of communication data is ensured between the computer 102 and the conventional type WTA server 103 as shown in Fig. 10. Also, similarly security of communication is also ensured between the portable type information terminal 107 and the conventional type WTA server 103 as shown in Fig. 11, between the gateway 105 and the conventional type WTA server 103, and between the portable type information terminal 107 and the gateway 105. However, in the later communication system, the encrypted communication data is once decoded in the gateway 105 and again encrypted with another protocol. Accordingly, intervention of the gateway 105 as third party other than concerned parties in data transmission, is a weak point for ensuring security of communication.

A problem of ensuring security of communication in the gateway 105 may be considered separately in two points. The first point is possibility that the gateway is attacked by the third party for tampering or stealing of communication data transmitted between the conventional type WTA server 103 and the portable type information terminal 107. The second point is possibility of subjecting to underlook or tamper of data in unsecured condition by manager of the gateway 105.

For the former problem, various proposals are performed in order to avoid. For example, it has been proposed to prevent breaking-in of malicious third party by employing a firewall as proposed in Japanese Unexamined Patent Publication No. Heisei 10-200530, Japanese Unexamined Patent Publication No. Heisei 10-285216 and Japanese Unexamined Patent Publication No. Heisei 11-146016. However, the firewall is not always perfect for possibility of communication data transmission bypassing the network by way of tunneling process. On the other hand, for the later problem, there is no way but merely relying on morality of the manager of the gateway since the encrypted communication data is decoded in the gateway for next encryption.

Between the portable type information terminal 107 and the server on the network as set forth above, nature of transmission paths up to the gateway at the midway are different, it is not possible to ensure end-to-end security of communication.

### SUMMARY OF THE INVENTION

It is therefore an object of the present invention to provide a communication method and a communication system for ensuring security of communication between a portable type information terminal and a server storing demanded contents.

According to the first aspect of the present invention, a communication method comprises the steps of:
performing transmission of an encrypted data with a predetermined protocol realizing process for ensuring security in communication on a telephone network between a portable type information terminal having a function obtaining a content on a network and displaying the content and a gateway connected with the portable type information terminal through the telephone network; and
performing tunneling process for the encrypted data between the gateway and a server storing the content on the network.

With the construction set forth above, by tunneling process of the gateway to transmit the encrypted data from the portable type information terminal to the server as is, process to once decode the encrypted data and again encrypt adapting to the transmission line to the server becomes unnecessary to overcome the weak point of the gateway in ensuring security in communication.

Data may be transmitted between the portable type information terminal and the gate way connected through the telephone network by a wireless session protocol, and data may be transmitted between the gateway and the server connected via an internet by an internet protocol.

In the particular method set forth above, as communication protocol ensuring security in communication in the telephone network between the portable type information terminal and the gateway, WSP is employed, and as communication protocol ensuring security in communication in the internet between the gateway and the server on the internet, IP is employed. It is also possible to employ other communication protocol may be employed as long as the security in communication can be ensured.

The gateway may perform a process including:
first step of transmitting the encrypted data from the portable type information terminal to the destination server through tunneling process; and
second step of transmitting a predetermined data transmitted from the server through tunneling process to the portable type information terminal.

The gateway may perform a process further including:
third step of making judgment whether the encrypted data of the portable type information terminal is adapted for tunneling process or not per each destination server, and the first step is executed when the encrypted data is judged as being adapted to tunneling process at third step. The gateway may performs a process further including:
third step of making judgment whether the encrypted data of the portable type information terminal is adapted for tunneling process or not per each destination server; and
fourth step of decoding the encrypted data from the portable type information terminal and encrypting data adapting to a transmission lie to the server when the destination server is judged as not adapted for the tunneling process. The gateway may make judgment whether the encrypted data is adapted to the tunneling process by monitoring a response with accessing a port number to be used upon the tunneling process.

The server storing the contents on the network may include a first server transmitting the contents to the portable type information terminal connected to the telephone network, and a second server transmitting the contents to a terminal connected to a communication network other than the telephone network.

According to a communication system comprises:
a portable type information terminal including content demanding means for demanding contents on a network to obtain, display means for displaying the demanded content as received, encrypting means for transmitting data for obtaining the content through a telephone network with encryption, decoding means for decoding the content with encryption transmitted from the telephone network;
a gateway connected with the portable type information terminal through the telephone network, performing tunneling process for feeding the encrypted data from the portable type information terminal to a destination server and feeding a predetermined data transmitted through tunneling process to the portable type information terminal; and
a server including decoding means for extracting data encrypted by the portable type information terminal from data transmitted from the gateway through tunneling process, data converting means for converting the contents demanded by the portable type information terminal into an encrypted data which can be decoded by decoding means of the portable type information terminal and data transmitting means for performing tunneling process for the encrypted data from the data converting means for transmitting to the gateway.

With the construction set forth above, the portable type information terminal transmits data encrypted by the encrypting means upon demanding contents to the server on the network. The gateway receiving the encrypted data transmits data performing tunneling process to transmit to the destination server. The server is responsive to the data for extracting data encrypted by the portable type information terminal for decoding, and converts the demanded contents into the encrypted data which can be decoded by the decoding means of the portable type information terminal to transmit to the gate way through the tunneling process. From the gateway, the encrypted data is transmitted to the portable type information terminal. By this, data passing through the gateway is held in encrypted form to ensure security in communication.

The gateway may comprise a route table describing whether each individual server is adapted for the tunneling process for the data encrypted by the portable type information terminal or not, and tunneling process non-adapted data transmitting means active when the destination server is judged as not adapted for the tunneling process, for decoding the encrypted data from the portable type information terminal and encrypting data adapting to a transmission lie to the server.

In the system set forth above, since process on the side of the gateway is different depending whether the each individual server is adapted to the tunneling process or not. Therefore, the table indicating whether the server is adapted to the tunneling process or not per each individual server, is provided on the side of the gateway for performing retrieval on the table at every occasion of demand for the contents from the portable type information terminal. When the server is adapted to the tunneling process, the encrypted data from the portable type information terminal is subject to tunneling process to be fed to the server as is. On the other hand, if the server is not adapted to the tunneling process, as in the prior art, the encrypted data from the portable type information terminal is once decoded and again encrypted adapting the transmission line to the server. By providing different ways of process depending upon the server, the present invention is applicable even if the server not adapted to the tunneling process is remained on the network.

The gateway may make judgment whether each individual server is adapted for the tunneling process for the data encrypted by the portable type information terminal or not by monitoring a response to access for a port number to be used in tunneling process.

With the process set forth above, even if the gateway is not provided with the table or when the destination server is not contained in the table, judgment whether the server is adapted to the tunneling process or not can be done by actually accessing the port number to be used in the tunneling process if response received, and judgment is made that the server is not adapted to the tunneling process otherwise.

Data may be transmitted between the portable type information terminal and the gateway connected through the telephone network by a wireless session protocol, and data is transmitted between the gateway and the server connected via an internet by an internet protocol.

In the particular method set forth above, as communication protocol ensuring security in communication in the telephone network between the portable type information terminal and the gateway, WSP is employed, and as communication protocol ensuring security in communication in the Internet between the gateway and the server on the Internet, IP is employed. It is also possible to employ other communication protocol may be employed as long as the security in communication can be ensured.

The server storing the contents on the network may include a first server transmitting the contents to the portable type information terminal connected to the telephone net work, and a second server transmitting the contents to a terminal connected to a communication network other than the telephone network.

### BRIEF DESCRIPTION OF THE DRAWINGS

The present invention will be understood more fully from the detailed description given hereinafter and from the accompanying drawings of the preferred embodiment of the present invention, which, however, should not be taken to be limitative to the invention, but are for explanation and understanding only.

In the drawings:
Fig. 1 is a diagrammatic illustration showing a system construction showing an outline of the preferred embodiment of a communication system according to the present invention;
Fig. 2 is an explanatory illustration showing a principle of the shown embodiment of the communication method in the case where the conventional WTA servers are completely replaced with the preferred embodiment of WTA servers;
Fig. 3 is an explanatory illustration showing a principle of the shown embodiment of the communication method in the case where both of the shown embodiment of the WTA servers and the conventional WTA servers are present;
Fig. 4 is an illustration showing a general construction, in which a part of the shown embodiment of the communication system is illustrated in particular form;
Fig. 5 is a flowchart showing a major part of flow of process operation of the shown embodiment of the gateway;
Fig. 6 is an explanatory illustration showing a flow of data in the case of feeding of data to new type WTA server in the shown embodiment;
Fig. 7 is a flowchart showing flow of operation for determining destination of data fed from a first portable type information terminal to the gateway in the shown embodiment;
Fig. 8 is an illustration showing a general construction showing a part of communication system in a modification of the present invention;
Fig. 9 is an illustration showing a system construction showing a general construction of the conventional communication system using internet;
Fig. 10 is an explanatory illustration showing a manner of communication between a computer and a HTTP server; and
Fig. 11 is an explanatory illustration showing a manner of communication between a portable type information terminal and the conventional type WTA server.

### DESCRIPTION OF THE PREFERRED EMBODIMENT

The present invention will be discussed hereinafter in detail in terms of the preferred embodiment of the present invention with reference to the accompanying drawings. In the following description, numerous specific details are set forth in order to provide a thorough understanding of the present invention. It will be obvious, however, to those skilled in the art that the present invention may be practiced without these specific details. In other instance, well-known structure are not shown in detail in order to avoid unnecessary obscurity of the present invention.

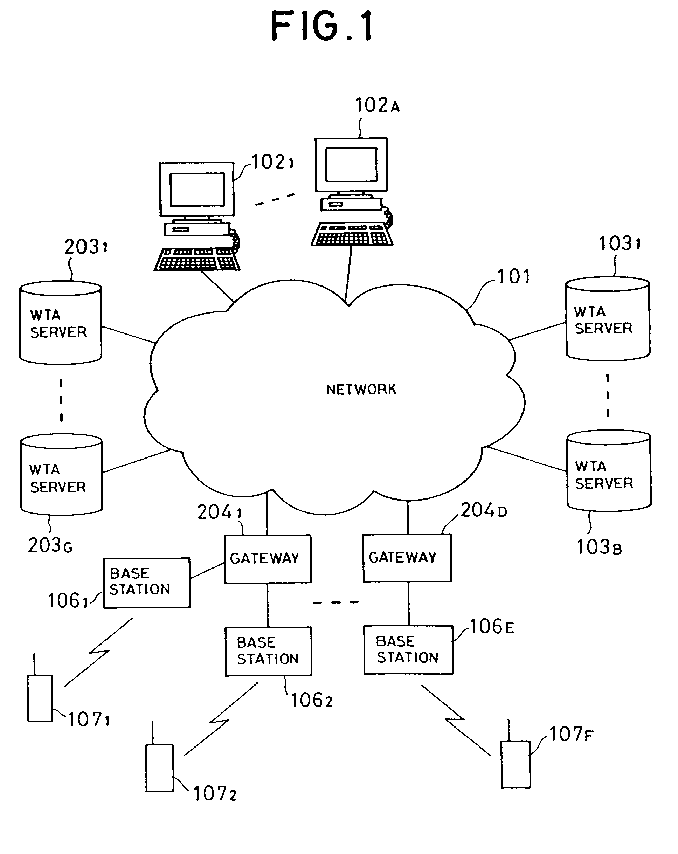

Fig. 1 shows an outline of the preferred embodiment of a communication system according to the present invention. In Fig. 1, like components to those in Fig. 9 are identified by like reference numerals and detailed discussion for these components will be omitted in order to avoid redundant discussion for keeping the disclosure simple enough to facilitate clear understanding of the present invention. To a network 101, in addition to the conventional type WTA servers 103₁ to 103_{B}, the preferred embodiment of WTA servers 203₁ to 203_{G} are connected. The preferred embodiment of the WTA servers 203₁ to 203_{G} are servers cooperated with gateways 204₁ to 204_{D} for enhancing security of communication on WWW and partly differentiated construction and function from the conventional type WTA servers 103₁ to 103_{B}. It should be noted when the communication system is completely replaced with the system for ensuring security of communication according to the present invention, the conventional type WTA servers 103₁ to 103_{B} are removed and only the preferred embodiment of the WTA servers 203₁ to 203_{G} are present on the network.

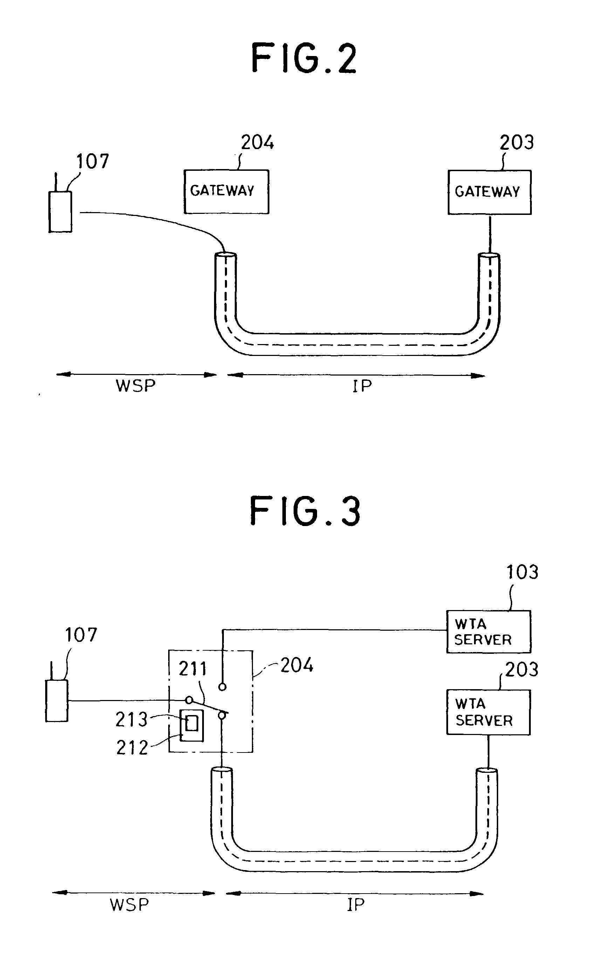

Fig. 2 shows a principle of a communication method in the case where all of the conventional WTA servers are replaced with the preferred embodiment of the WTA servers. In the shown embodiment, communication between the portable type information terminal 107 and the gateway 204 is performed using a protocol called as wireless session protocol (WSP). Between the gateway 204 and the shown embodiment of the WTA server 203, a protocol called as internet protocol (IP) is performed. In the shown embodiment, WSP is used for ensuring security of communication. Communication between the gateway 204 and the shown embodiment of the WTA server 203 is done by tunneling process.

Fig. 3 shows a principle of a communication method in the case before complete transition to a new system where the conventional type WTA servers and the preferred embodiment of the WTA servers are present in admixed manner. There are two ways of communication where the portable type information terminal 107 communicates with the shown embodiment of the WTA server 203, and where the portable type information terminal 107 communicates with the conventional type WTA server 103. Upon communication with the shown embodiment of the WTA server 203, a communication in a zone between the gateway 204 and the shown embodiment of the WTA server 203 is done by tunneling process discussed in Fig. 2. When the portable type information terminal 107 is in communication with the conventional type WTA server 103, the communication is completely the same as that discussed with respect to Fig. 11.

Namely, the gateway 204 using in the shown embodiment is required switching means 211 for switching the process shown in Fig. 3 between the new system and the conventional system in the stage before completely transiting to the new system for ensuring security in communication. Also, similarly to the conventional gateway 105 (see fig. 9), it is required means for once decoding the encrypted communication data in one protocol and encrypting the decoded communication data in the other protocol.

It is determined by a route determining portion 212 that the communication data transmitted from the portable type information terminal 107 to the gateway 204 is transmitted to the shown embodiment of the WTA server 203 or to the conventional type WTA server 103. The route determining portion 212 incorporates a route table 213 to select a route on the basis of past result of judgment written in the route table 213. When a server not written in the route table 213 is designated as destination to access, investigation is made whether the designated server is the shown embodiment of the WTA server 203 or the conventional type WTA server 103, on site to determine a route to reflect the result on the route table 213. The WTA servers 103 and 203 are present in huge number over the world. Therefore, history of the WTA servers past dealt by the gateway 204 is maintained to be used in determination of the route in second time and subsequent occasion to prevent excessive increase of data amount in the route table 213.

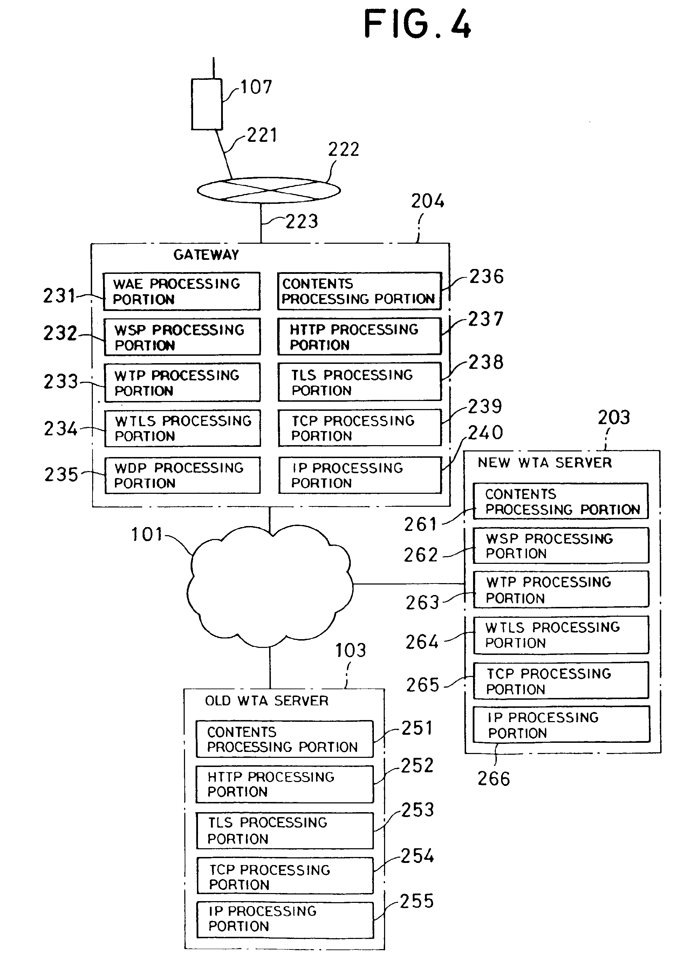

Fig. 4 shows particular construction of the shown embodiment of the communication system. The portable type information terminal (client) 107 is connected to a mobile communication network 222 through a communication lines 221. Here, the communication lines 221 is not necessarily radio communication lines but can be wired communication lines. Between the mobile communication network 222 and the gateway 204, other communication line 223 is connected. The gateway 204 is connected to the network 101. To the network 101, the preferred embodiment of the WTA servers (new WTA servers) 203 are connected in addition of the conventional type WTA servers (old WTA servers) 103.

The gateway 204 is provided with wireless application environment (WAE) processing portion 231, a wireless session protocol (WSP) processing portion 232, a wireless transport protocol (WTP) processing portion 233, a wireless transport layer security protocol (WTLS) processing portion 234, a wireless datagram protocol (WDP) processing portion 235, a contents processing portion 236, a hyper text transfer protocol (HTTP) processing portion 237, a transporting layer security (TLS) processing portion 238, a transmission control protocol (TCP) processing portion 239, and an internet protocol (IP) processing portion 240. Operation of these processing portions will be discussed later. The gateway 204 perse is constructed with a central processing unit (CPU), a storage medium storing program to be executed by CPU and a working memory temporarily storing various data and communication means performing input and output of data. These hardware construction is well known and omitted from illustration.

The conventional type WTA server 103 is constructed with a content processing portion 251, a HTTP processing portion 252, a TLS processing portion 253, a TCP processing portion 254 and an IP processing portion 255. On the other hand, the shown embodiment of the WTA server 203 is constructed with a contents processing portion 261, a WSP processing portion 262, a WTP processing portion 263, a WTLS processing portion 264, a TCP processing portion 265 and an IP processing portion 266. The conventional type WTA server 103 and the shown embodiment of WTA server 203 are also constructed, like the gateway 24, with CPU, the storage medium storing the program and the working memory or the like. Hardware of these are also omitted from illustration.

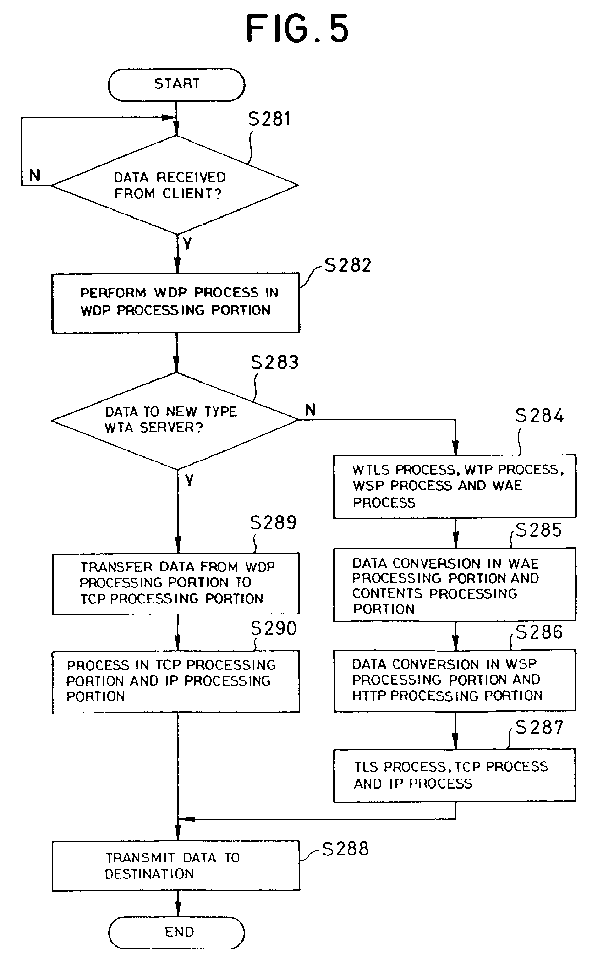

Fig. 5 illustrates the major portion of flow of processing operation of the shown embodiment of the gateway. The foregoing CPU of the gateway 204 receives data for obtaining contents from any one of the portable type information terminals 107₁ to 107_{F} as client (step S281: Y). The received data is fed to the WDP process portion 235 to be processed therein (step S282). The protocol (wireless datagram protocol: WDP) to be handled by the WDP processing portion 235 defines a procedure to be a base performing data communication using various types of communication network. The WDP processing portion 235 performs this process and performs discrimination of kind of WTA server as destination of data transmitted from the client.

For example, it is assumed that the data is to be transmitted to the conventional type WTA server 103₁. In this case, (step S283: N), at first WTLS process by the WTLS processing portion 234, WTP process by the WTP processing portion 233, WSP process by the WSP processing portion 232 and WAE process by the WAE processing portion 231 are performed (step S284). Here, WAE process is a process of wireless markup langauage (WML) as a markup language for describing document similar to HTML and WML script as a script language similar to Java script and wireless telephony application (WTA) of telephony service and wireless telephony application interface (WTAI) as its interface and so forth.

Next, the result of process of the WAE processing portion 231 is transferred to the contents processing portion 236 to perform data conversion (step S285). The result of process of the WSP process portion 232 is transferred to HTTP processing portion 237 to perform data conversion (step S286). Finally, data thus converted is transmitted to the conventional type WTA server 103 as destination of transmission (step S288) via the TLS processing portion 238, the TCP processing portion 239 and the IP processing portion 240 (step S287).

On the contrary, when judgment is made that the received data is to be transmitted to the new type WTA server 203 (Y), the WDP processing portion 235 transfers data to the TCP processing portion (step S289). After processing of the TCP processing portion, IP processing is performed by the IP processing portion (step S290). Then, after those processings, the data is transmitted to the new type WTA server 203 (step S288).

Namely, when judgment is made that the received data is to be transmitted to the conventional type WTA server 103 (step S283: N) , encrypted data as in the prior art is decoded into the original WSP data to transmit to the destination with conversion into the HTTP data. In contrast to this, if judgment is made that the received data is to be transmitted to the new type WTA server 203 (step S283: Y), the gateway 204 transmits the data to the destination with IP process and without decoding the encrypted data. By this, security of communication in the gateway can be ensured.

It should be noted that while general discussion has been given for the case where data is transmitted from the portable type information terminal 107 as the client to the WTA server 103 or 203 in Fig. 5, the flow is reversed in the case where data is transited from the WTA server 103 or 203 to the portable type information terminal 107.

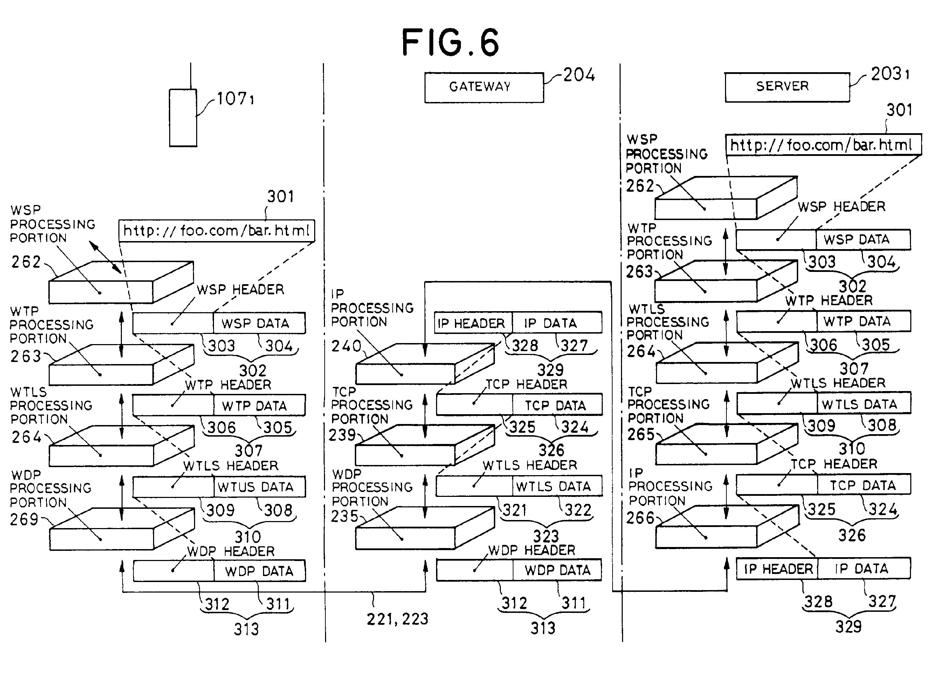

Fig. 6 shows more particularly the case where data is transmitted to the new type WTA server. The following discussion will be given in terms of the case where the first portable type information terminal 107₁ as client obtains a desired content from the new type first WTA server 203₁. In the first portable type information terminal 107₁, the user inputs URL to obtain the content. Here, it is assumed that URL 301 "http://foo.com/bar.html" is input. In the WSP processing portion 262, the input URL is converted into a byte string encoded in hexadecimal to store in WSP header 303 forming data 302 to be transmitted. At this time, since the first portable type information terminal 107₁ only notify URL, no data is stored in the portion of the WSP data 304. As a particular example of data to be stored in the WSP header 303 is encoded data of the language "GET http://foo.com/bar.html Accept-Language: en", for example. Here, "Accept-Language: en" represents that the kind of language to be displayed on the side of the first portable type information terminal is "en".

In the WTP processing portion 263, data 302 thus prepared is incorporated in the portion of the WTP data 305, also, data, such as address of destination or port number or the like is incorporated in the portion of the WTP header 306. Then, the data 307 is transferred to the WTLS processing portion 264. In the WTLS processing portion 264, a process for ensuring security of communication, such as encryption of data 307, adding message authentication code, such as by public key or the like, is performed to obtain WTLS data 308. Then, data 310 added WTLS header 309 is transferred to the WDP processing portion 269.

In the WDP processing portion 269, data 310 is contained in a portion of the WDP data 311. In the portion of the WDP header 312, the header information enabling process in the telephone network is included and transmitted to the telephone network as data 313.

In the gateway 204, data 313 is received through the telephone network. Then, the received data is transferred to the WDP processing portion 235. The WDP processing portion 235 performs reverse process to the process performed on the side of the first portable type information terminal 107₁ to return to data in the WTLS layer to make determine the destination server on the basis of the WTLS header 321. Then, when judgment is made that the destination server is one of the new type WTA servers 203₁ to 203_{G}, tunneling process is performed. Therefore, data 323 from the WTLS header 321 and the WTLS data 322 is transferred to the TCP processing portion 239 as TCP data with out decoding and encrypting process. Namely, in this case, without performing the process for once decoding the data encrypted on the side of the first portable type information terminal 107₁ and again encrypting for the network 101 as required in the case where the conventional type WTA servers 103₁ to 103_{B} is designated as destination, the data encrypted on the side of the first portable type information terminal 107₁ is directly transmitted to the TCP processing portion 239.

In the TCP processing portion 239, data 323 consisted of WTLS header 321 and WTLS date 322 is taken as TCP data 324 to be transferred to the IP processing portion 240 as data 326 with adding the TCP header 325. In the IP processing portion 240, this data 326 is taken as the IP data 327 to be transmitted to the network 101 as data 329 added the IP header 328.

In the first WTA server 203₁, the arriving data 329 is received by the IP processing portion 266 to perform processes in the TCP processing portion 265, the WTLS processing portion 264, the WTP processing portion 263 and the WSP processing portion 262 to perform reverse process as those performed in the first portable type information terminal 107₁. Therefore, discussion for the particular process will be omitted. At the midway of the shown process, verification of the decoded message secret identification code is performed in the WTLS processing portion 264. Then, finally, WSP processing portion 262 obtains URL 301 of "http://foo.com/bar.html" to know that the first portable type information terminal 107₁ requires obtaining of this URL.

Then, the first WTA server 203₁ feeds data indicative of the contents of the URL toward the first portable type information terminal 107₁ via the gateway 204 as WSP data 304. At this time, the WTLS processing portion 264 performs process for ensuring security of communication by adding the message authentication code in the similar manner as done by the WTLS processing portion 264 of the first portable type information terminal 107. Thereafter, the IP processing portion 266 performs IP process for the WSP data 304 to transmit to the network 101 as data 329. The data 329 thus transmitted is received by the gateway 204. In the IP processing portion 240 of the gateway 204, PCT data 324 and the TCP header 325 are reproduced from an IP data 327 contained in the data 329. Also, in the TCP processing portion 239, data 323 consisted of WTLS header 321 and WTLS data 322 is reproduced. Furthermore, in the WDP processing portion 269, the WDP data 311 and the WDP header 312 are reproduced. Data 323 indicative of these is transmitted to the first portable type information terminal 107₁ via the telephone network.

In the first portable type information terminal 107₁, the process in respective portions are performed in reversed manner or backward to verify the message authentication code by decoding in the WTLS processing portion 264. Thereafter, the contents of URL 301, "http://foo.com/bar.html" is obtained to reproduce.

It should be noted that in Fig. 6, the portion shown with halftone dots represents data in a condition where security of data is ensured by the process for ensuring security of data by the process for ensuring security of communication. Since the data is maintained in encrypted condition at the portion of the gateway 204, it becomes possible to protect the content from external break-in and may not be seen the content by the manager of the gateway 204.

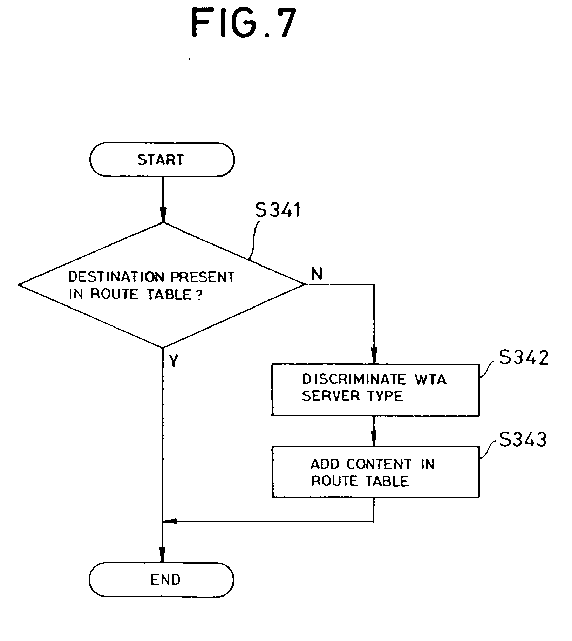

Fig. 7 shows a flow of operation on the side of gateway for determining destination of data transmitted from the first portable type information terminal in the particular process as set forth above. This is the process to be a base of judgment at step S283 in Fig. 5. As set forth in terms of Fig. 6, the WDP processing portion 269 discriminates the kind of the WTA server as destination of the data from one of the portable type information terminal 107₁. For discrimination process, the route table 213 shown in Fig. 3 is used. CPU in the gateway 204 checks whether the relevant destination WTA server has been written therein (step S341). If present, if the information written in connection with the WTA server in question indicates that the WTA server in question is the conventional type, the judgment at step S283 of Fig. 5 is made as not the new type WTA server (N), and otherwise as the new type WTA server (Y).

If judgment is made that the destination WTA server is not written in the route table 213 at step 341 of Fig. 7, the gateway 204 actually accesses the server to discriminate the type thereof (step S342). When the destination WTA server is to perform the tunneling process, if the port number to be used actually in the tunneling process is accessed, a response thereto is returned and if the port number is not for the tunneling process and thus indicate normal server, no response is returned even when the port number is accessed. Therefore, utilizing this fact, type of the WTA server may be judged. More particularly, check is performed whether a response is delivered within a given period after accessing the port number of the designation WTA server. If response is returned within the given period, then, judgment is made that the destination WTA server is the new type WTA server which performs tunneling process and otherwise that the destination WTA server is the old type WTA server. The result of judgment is written in the route table (step 343). By this, in the next and subsequent times, if this WTA server is designated as destination, the type of the server can be seen by retrieval of the route table 213.

### Modification

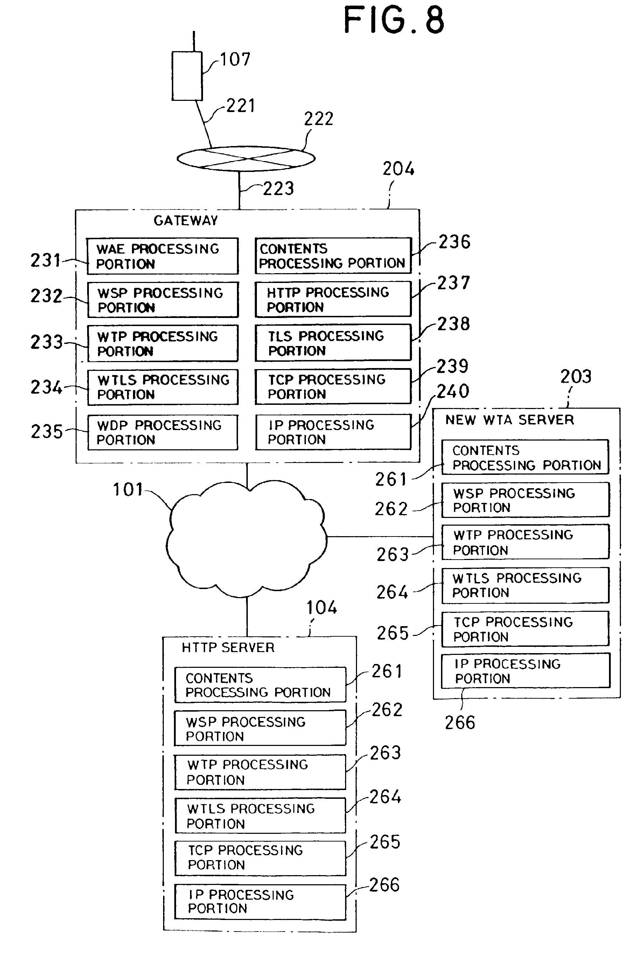

Fig. 8 shows a condition where a general HTTP server is present in addition to the WTA server according to the present invention, in the network. In Fig. 8, like components to those in Figs. 4 and 9 are identified by like reference numerals and detailed discussion for these components will be omitted in order to avoid redundant discussion for keeping the disclosure simple enough to facilitate clear understanding of the present invention. In general, the WTA server and the 203 and the HTTP server 104 has many common functions, both receive URL and return the corresponding contents. There are no difference in the functions and protocols. However, the kind of contents to be returned is differentiated partly. In case of the WTA server 20, since it is premised that the WTA server is connected to the telephone network, and the contents to be handled is a message registered in an answering telephone service center and other particular contents. In case of the HTTP server, such restriction is not present, and various contents can be handled.

Accordingly, the portable type information terminals 107₁ to 107_{F} may be connected not only to the WTA server 203 but also to the HTTP server as long as it is connected to the communication network other than the telephone network, via the gateway 204. Also, by application of the present invention, security in communication at the gateway 204 can be ensured.

As set forth above, since the present invention is designed to performing tunneling process for transferring the encrypted data transmitted from the portable type information terminal to the gateway, it makes it unnecessary to decode once and encrypt adapting to the next transmission line in the gateway to the load.

On the other hand, with the present invention, since the portable type information terminal transmits the data encrypted by encrypting means in response to the demand for the contents the server, on the network, and since the encrypted data is transmitted to be the destination WTA server through the tunneling process, it can eliminate necessity of decoding and encrypting hardware in the gateway to the next transmission line for reducing the gateway.

In addition, according to the present invention, since the route table indicating whether each individual server is adapted to the tunneling process, quick data transmission can be performed by making the content of the route table complete.

Furthermore, with the present invention, since check is performed whether the tunneling process can be done or not, the tunneling process can be effectively used even when the server is newly adapted for tunneling process during process.

## Claims

1. A communication method comprising the steps of:
performing transmission of an encrypted data with a predetermined protocol realizing process for ensuring security in communication on a telephone network between a portable type information terminal having a function obtaining a content on a network and displaying the content and a gateway connected with said portable type information terminal through said telephone network; and
performing tunneling process for the encrypted data between said gateway and a server storing said content on said network.

2. A communication method as set forth in claim 1, wherein data is transmitted between said portable type information terminal and said gate way connected through said telephone network by a wireless session protocol, and data is transmitted between said gateway and said server connected via an internet by an internet protocol.

3. A communication system comprising:
a portable type information terminal including content demanding means for demanding contents on a network to obtain, display means for displaying the demanded content as received, encrypting means for transmitting data for obtaining the content through a telephone network with encryption, decoding means for decoding said content with encryption transmitted from said telephone network;
a gateway connected with said portable type information terminal through said telephone network, performing tunneling process for feeding the encrypted data from said portable type information terminal to a destination server and feeding a predetermined data transmitted through tunneling process to said portable type information terminal; and
a server including decoding means for extracting data encrypted by said portable type information terminal from data transmitted from said gateway through tunneling process, data converting means for converting the contents demanded by said portable type information terminal into an encrypted data which can be decoded by decoding means of said portable type information terminal and data transmitting means for performing tunneling process for the encrypted data from said data converting means for transmitting to said gateway.

4. A communication system as set forth in claim 3, wherein said gateway comprises a route table storing data indicative whether each individual server is adapted for the tunneling process for the data encrypted by said portable type information terminal or not, and tunneling process non-adapted data transmitting means active when the destination server is judged as not adapted for the tunneling process, for decoding the encrypted data from said portable type information terminal and encrypting data adapting to a transmission lie to said server.

5. A communication system as set forth in claim 3, wherein said gateway makes judgment whether each individual server is adapted for the tunneling process for the data encrypted by said portable type information terminal or not by monitoring a response to access for a port number to be used in tunneling process.

6. A communication system as set forth in claim 3, wherein data is transmitted between said portable type information terminal and said gate way connected through said telephone network by a wireless session protocol, and data is transmitted between said gateway and said server connected via an internet by an internet protocol.

7. A communication method as set forth in claim 1, wherein said gateway performs a process including:
first step of transmitting the encrypted data from said portable type information terminal to said destination server through tunneling process; and
second step of transmitting a predetermined data transmitted from said server through tunneling process to said portable type information terminal.

8. A communication method as set forth in claim 7, wherein said gateway performs a process further including:
third step of making judgment whether the encrypted data of said portable type information terminal is adapted for tunneling process or not per each destination server, and said first step is executed when the encrypted data is judged as being adapted to tunneling process at third step.

9. A communication method as set forth in claim 7, wherein said gateway performs a process further including:
third step of making judgment whether the encrypted data of said portable type information terminal is adapted for tunneling process or not per each destination server; and
fourth step of decoding the encrypted data from said portable type information terminal and encrypting data adapting to a transmission lie to said server when the destination server is judged as not adapted for the tunneling process.

10. A communication method as set forth in claim 8, wherein said gateway makes judgment whether said encrypted data is adapted to the tunneling process by monitoring a response with accessing a port number to be used upon the tunneling process.

11. A communication method as set forth in claim 1, wherein said server storing the contents on said network includes a first server transmitting said contents to said portable type information terminal connected to said telephone net work, and a second server transmitting said contents to a terminal connected to a communication network other than said telephone network.

12. A commnication system as set forth in claim 3 wherein said server storing the contents on said network includes a first server transmitting said contents to said portable type information terminal connected to said telephone net work, and a second server transmitting said contents to a terminal connected to a communication network other than said telephone network.

13. A computer program comprising computer-executable instructions for carrying out a method according to any of claims 1, 2 or 7 to 11.
